# DEMANDE DE BREVET EUROPEEN

(11) **EP 3 006 700 A1**
(43) Date de publication de la demande: **13.04.2016**
(21) Numéro de dépôt: 14184638.6
(22) Date de dépôt: 12.09.2014
(51) Int. Cl.: F02D 41/00, F02D 13/02, F02D 17/02, F02D 41/30, F02D 33/02

(54) **Moteur à combustion de véhicule automobile à désactivation de cylindre adaptée**

(71) Demandeur: PEUGEOT CITROËN AUTOMOBILES SA, 78140 Vélizy-Villacoublay (FR)
(72) Inventeur: Veiga Pagliari, Diego Rafael, 75012 Paris (FR)

(57) **Abrégé**

L'invention concerne un moteur à combustion de véhicule automobile dans lequel un dispositif de modification de comportement de soupapes est configuré pour qu'au moins une soupape d'échappement d'au moins un cylindre présente une cinétique différente pendant une phase initiale de réduction de volume selon que le cylindre est en cycle activé ou en cycle désactivé (3,5)

## Description

L'invention concerne la désactivation de cylindre(s) dans les moteurs à combustion de véhicules automobiles.

Dans ce type de moteur, il s'agit de désactiver la distribution, c'est-à-dire une ou plusieurs soupapes sur un cylindre ou plusieurs et de ce fait, pour produire la même puissance, il faut demander davantage de puissance aux autres cylindres restés actifs. Les cylindres restés actifs fonctionnent sur un point de fonctionnement avec un rendement meilleur, permettant au moteur de moins consommer.

Les systèmes actuels reposent sur la désactivation d'un même cylindre de manière répétitive. S'ils sont relativement satisfaisants pour un moteur à quatre cylindres, par contre, pour un moteur à trois cylindres par exemple, la désactivation d'un même cylindre sur plusieurs cycles est source de vibrations très importantes. Afin de réduire ces vibrations, il faut réaliser ce que l'on nomme une désactivation tournante. Autrement dit, c'est alternativement chaque cylindre qui est désactivé.

Un cylindre donné est donc le siège de cycles alternativement actifs et inactifs et il faut donc mettre en oeuvre une séquence d'ouvertures et fermetures des soupapes du cylindre considéré qui soit telle que l'on minimise les pertes par pompage lors du cycle inactif, tout en assurant une reprise du cycle actif suffisamment performante.

Le but de l'invention est de proposer une séquence d'ouvertures et fermetures des soupapes d'un cylindre devant être désactivé laquelle séquence présente de tels avantages.

Ce but est atteint selon l'invention grâce à un moteur à combustion de véhicule automobile comprenant un jeu de cylindres formant chambres de combustion et un jeu de soupapes associées respectivement à ces cylindres, le moteur comportant un dispositif de modification de comportement des soupapes, le dispositif de modification de comportement des soupapes étant configuré pour commander pour au moins un cylindre deux cycles respectivement activé et désactivé du cylindre, lesquels cycles comportent chacun une phase initiale consistant en une réduction de volume de la chambre laquelle phase initiale met en oeuvre dans le cas du cycle activé un échappement effectif de gaz hors du cylindre par au moins une soupape d'échappement, lesquels cycles comportant chacun après la phase initiale de réduction de volume une suite de trois phases consistant successivement en une phase d'expansion du volume de la chambre de combustion, une seconde phase de réduction de volume de la chambre puis une seconde phase d'expansion de volume de la chambre, caractérisé en ce que le dispositif de modification de comportement de soupapes est configuré pour qu'au moins une soupape d'échappement dudit au moins un cylindre présente une cinétique différente pendant la phase initiale de réduction de volume selon que le cylindre est en cycle activé ou en cycle désactivé.

Avantageusement, le dispositif de modification de comportement de soupapes est configuré de telle sorte qu'en cycle activé la phase d'expansion consécutive à la phase initiale de réduction de volume est réalisée avec au moins une soupape d'admission du cylindre ouverte pendant au moins une partie de la phase d'expansion et en cycle désactivé la phase d'expansion consécutive à la phase initiale de réduction de volume est réalisée avec toutes les soupapes d'admission du cylindre fermées pendant l'ensemble de cette phase d'expansion.

Avantageusement, le dispositif de modification de comportement de soupapes est configuré de telle sorte que dans la phase initiale de réduction de volume une ouverture globale considérée sur l'ensemble des soupapes d'échappement du cylindre est plus faible en cycle activé qu'en cycle désactivé.

Avantageusement, le dispositif de modification de comportement de soupapes est configuré de telle sorte que dans la phase initiale de réduction de volume une soupape d'échappement du cylindre présente une course d'ouverture qui est plus faible en cycle activé qu'en cycle désactivé.

Avantageusement, ledit au moins un cylindre comporte au moins deux soupapes d'échappement, le dispositif de modification de comportement de soupapes est configuré pour placer les dites au moins deux soupapes d'échappement en position ouverte pendant au moins un partie de la phase initiale de réduction de volume en cycle désactivé et maintenir au moins une soupape fermée parmi lesdites au moins deux soupapes pendant la phase initiale de réduction de volume en cycle activé.

Avantageusement, le dispositif de modification de comportement de soupapes est configuré pour actionner en ouverture ladite au moins une soupape d'échappement en début de phase initiale de réduction de volume dans le cas du cycle désactivé et pour maintenir cette soupape d'échappement ouverte pendant les phases successives d'expansion, de réduction et d'expansion de volume du cycle désactivé.

Avantageusement, le dispositif de modification de comportement de soupapes est configuré de telle sorte qu'en cycle désactivé toutes les soupapes d'échappement sont fermées pendant la phase initiale de réduction de volume de la chambre et pendant la seconde phase de réduction de volume de sorte les gaz d'échappement générés pendant un cycle activé précédent restent prisonniers dans la chambre pendant l'ensemble du cycle désactivé.

Avantageusement, la phase initiale de réduction de volume met en oeuvre dans le cas du cycle désactivé un échappement effectif de gaz hors du cylindre par au moins une soupape d'échappement, et en cycle désactivé au moins une soupape d'échappement du cylindre reste ouverte au-delà de la fin de la phase initiale de réduction de volume de la chambre et pendant une partie de la phase d'expansion consécutive de sorte que ladite phase d'expansion consécutive produit une aspiration de gaz d'échappement dans le cylindre par la soupape d'échappement.

Avantageusement, le dispositif de modification de comportement de soupapes est configuré de telle sorte que ledit au moins un cylindre effectue alternativement un cycle activé et un cycle désactivé.

D'autres caractéristiques, buts et avantages de l'invention apparaitront à la lecture de la description qui va suivre, faite en référence aux figures annexées sur lesquelles :
- la figure 1 représente une suite de cycles actifs et inactifs selon un premier mode de réalisation de l'invention ;
- la figure 2 représente cette même suite de cycles sous la forme d'un diagramme pression-volume ;
- la figure 3 représente une suite de cycles actifs et inactifs selon un deuxième mode de réalisation de l'invention ;
- la figure 4 représente cette suite de cycles selon ce deuxième mode de réalisation de l'invention sous la forme d'un diagramme pression-volume ;
- la figure 5 représente une suite de cycles actifs et inactifs selon un troisième mode de réalisation de l'invention ;
- la figure 6 représente cette suite de cycles selon ce troisième mode de réalisation de l'invention sous la forme d'un diagramme pression-volume ;
- la figure 7 représente une suite de cycles actifs et inactifs selon un quatrième mode de réalisation de l'invention,

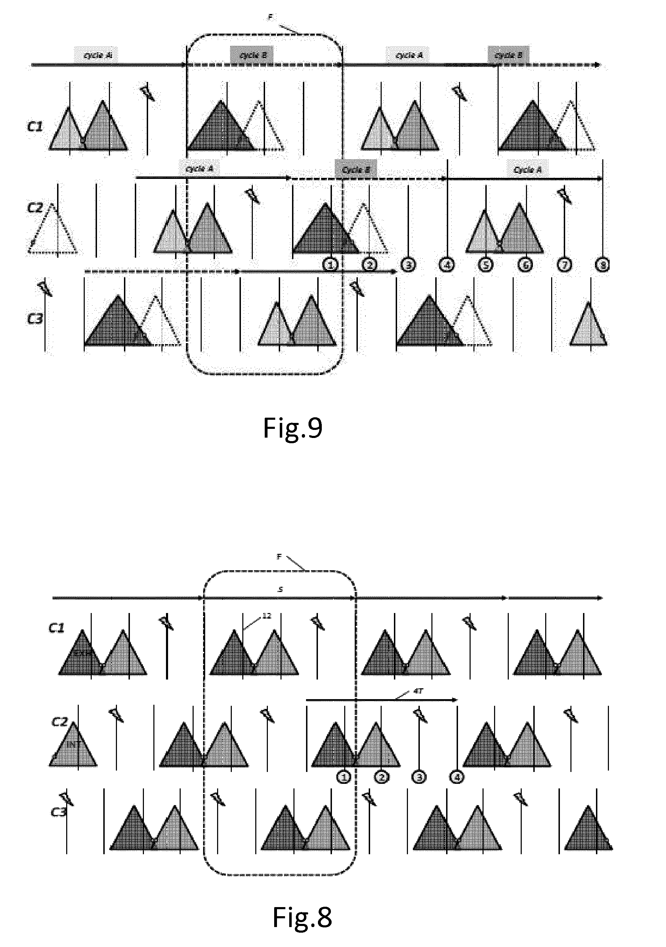

- la figure 8 représente une suite de cycles pour un moteur à trois cylindres fonctionnant de façon conventionnelle (art antérieur) ;
- la figure 9 représente une suite de cycles pour un moteur à trois cylindres fonctionnant selon l'invention avec désactivation tournante des cylindres.

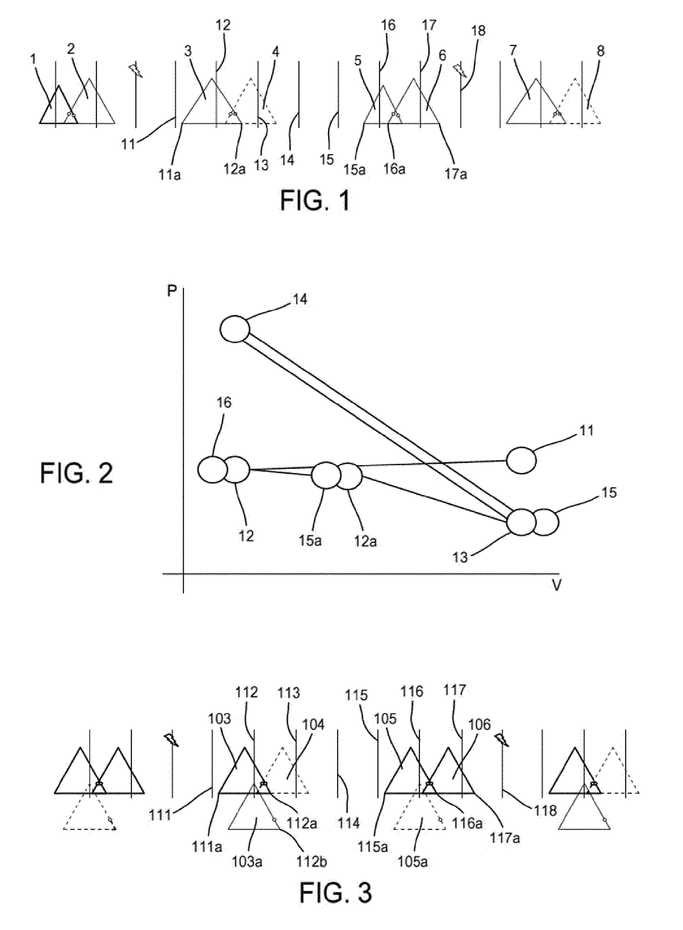

On a représenté sur la figure 1 une suite de cycles alternativement actifs et inactifs d'un même cylindre. Sur la figure 1, un triangle en train plein représente une ouverture effective de soupape, tandis qu'un triangle en trait pointillé représente une soupape désactivée, ici maintenue en position fermée. Les triangles 1, 3, 5 et 7 illustrent les mouvements d'ouverture des soupapes d'échappement du cylindre, tandis que les triangles 2, 4, 6 et 8 représentent les mouvements d'ouverture des soupapes d'admission du cylindre. Les traits verticaux représentent les points morts alternativement haut et bas du cylindre. Dans la présente description, un cycle sera considéré comme débutant au point mort bas du cylindre au début du mouvement de réduction de volume du cylindre lequel mouvement est dédié à l'échappement dans un cycle normal. Un cycle sera donc constitué d'un mouvement de réduction de volume suivi d'un mouvement d'expansion correspondant à la phase d'admission puis d'un nouveau mouvement de réduction de volume correspondant à la compression puis d'un nouveau mouvement d'expansion correspondant normalement au mouvement de détente.

On décrira, en référence à la figure 1 et à la figure 2, d'abord un cycle désactivé puis un cycle actif selon le présent mode de réalisation. Un cycle inactif est un cycle où aucune combustion n'a lieu dans la chambre tandis qu'un cycle actif est le siège d'une telle combustion.

Le cycle inactif débute au point mort bas représenté sous la référence 11, lequel point mort bas 11 se produit après la combustion du cycle actif précédent, dont le déclenchement de la combustion est symbolisé par un éclair. A ce moment l'ensemble des soupapes du cylindre est fermé, jusqu'à un point 11 a correspondant au début de l'ouverture 3 des soupapes d'échappement, ici au nombre de deux. Entre le point 11 et le point 11a, une première phase de compression est donc ici réalisée avant que les soupapes d'échappement ne soient ouvertes. Au point 11a, une soupape d'échappement est ouverte et la pression dans le cylindre dévient égale à la pression dans la conduite d'échappement. L'autre soupape est actionnée en ouverture de manière plus tardive selon une loi de levée différente laquelle sera décrite en référence au cycle actif.

Le cylindre atteint alors sont point mort haut sous la référence 12. Entre le point 11 a et le point 12, les gaz d'échappement initialement contenus dans le cylindre sont donc expulsés dans la conduite d'échappement.

Le point 12a correspond à l'instant de fermeture des soupapes d'échappement. Le point 12a est ici plus tardif que le point mort haut 12, de sorte qu'entre le point 12 et le point 12a, le cylindre est le siège d'un début de mouvement d'expansion. Une portion des gaz d'échappement est alors ré-aspirée dans le cylindre, puis piégée dans le cylindre au moment illustré par le point 12a où les soupapes d'échappement sont actionnées en fermeture pour marquer la fin du triangle 3. La soupape d'admission est, dans le présent cycle désactivé, maintenue fermée selon le triangle en pointillé 4 de sorte que les gaz d'échappement sont maintenus en enceinte close à partir du point 12a. Entre le point 12a et le point 13 où le cylindre atteint son point mort bas, les gaz d'échappement subissent une expansion. On s'assure par la ré-aspiration des gaz d'échappement que l'on piège suffisamment de gaz brulés pour ne pas atteindre une pression trop basse au point mort bas 13. A ce titre une pression d'au moins 0,15 bars est avantageuse. Grâce à une telle ré-aspiration des gaz d'échappement, on évite une production de vide dans le cylindre à partir de la position centrale du piston et jusqu'au point mort bas. La production de vide amènerait le cylindre à aspirer de l'huile provenant du circuit d'huile du moteur car la pression dans la chambre de combustion serait beaucoup plus faible que la pression dans le circuit d'huile et ce phénomène entrainerait une forte augmentation de la consommation d'huile.

De plus, si de l'huile apparaissait dans la chambre de combustion, la réactivation du cylindre après le cycle désactivé serait le siège d'un comportement dégradé en combustion. En effet il apparaitrait un phénomène d'encrassement sur les ouvertures d'admission et d'échappement conduisant à une réduction de la perméabilité du moteur et donc à une réduction de puissance. L'apparition d'huile augmenterait en outre une tendance à l'apparition de cliquetis, due à la présence de fines gouttes d'huile agissant comme des points à haute température dans la chambre de combustion pendant la phase de combustion.

Le fait de ré-aspirer seulement une portion des gaz brulés permet de ne pas re-compresser une forte quantité de gaz brulés, qui sont très chauds et à très haute pression, ce qui signifierait qu'au point mort haut après re-compression, on obtiendrait dans la chambre de combustion une pression et une température à des niveaux plus élevés que les niveaux obtenus lors d'un cycle normal, ce qui pourrait provoquer une casse du moteur. De plus le moteur dépenserait beaucoup d'énergie pour re-compresser les gaz, augmentant une pénalité de rendement pendant le cycle désactivé. On perdrait ainsi l'intérêt de la désactivation de cylindre.

Grâce à une telle ré-aspiration de gaz brulés, on évite en outre un piégeage d'air frais dans le cylindre pendant le cycle désactivé. Si l'on maintient de l'air frais dans le cylindre pendant l'ensemble du cycle désactivé, et qu'ensuite on souhaite utiliser cet air frais pour réactiver le cylindre, le cylindre sera en manque de turbulences pour avoir un bon comportement en combustion. Il s'en suit une combustion dégradée et une mauvaise efficacité du moteur. Pour éviter d'utiliser le même air, on pourrait imaginer expulser cet air frais par l'ouverture d'échappement puis de mettre en oeuvre une nouvelle phase d'admission après la désactivation. Néanmoins on perd alors l'intérêt de la désactivation de cylindre car le principe de la désactivation est de réduire les pertes par pompage en réduisant les pertes par pompage à l'admission. De plus, en envoyant de l'air frais à l'échappement, on ne maintient plus le ratio stoechiométrique de carburant à l'air dans le convertisseur catalytique, ce qui signifie une forte réaction exothermique dans le convertisseur catalytique entrainant un endommagement du convertisseur. De plus, le fait de s'écarter du ratio stoechiométrique engendre la dégradation de la fonction de post-traitement.

La fin du cycle désactivé consiste en la re-compression des gaz brulés jusqu'à atteindre le point mort haut 14, puis une ré-expansion du volume de la chambre jusqu'à atteindre le point mort bas 15. Le cycle activé commence alors.

Le cycle activé débute par une ouverture d'une soupape d'échappement laquelle présente une loi de levée 5 différente de celle décrite précédemment. Dans le présent exemple cette loi de levée différente est mise en oeuvre par une soupape différente de celle ayant décrit la première loi de levée décrite en référence au triangle 3 du cycle désactivé, mais en variante cette deuxième loi de levée 5 peut être mise en oeuvre par la même soupape. Dans le présent exemple, la soupape ayant décrit la loi de levée du triangle 3 est maintenue fermée pendant le cycle actif. Si la loi de levée du triangle 3 peut être appliquée à toutes les soupapes d'échappement alors on autorise l'activation de ces soupapes pendant le cycle actif.

La deuxième loi de levée 5 débute au point 15a après une première mise en pression à soupapes fermées. Le point 15a est ici nettement plus tardif que le point 11a d'ouverture de soupape d'échappement de la loi de levée 3, de sorte que la mise en pression des gaz d'échappement piégés est ici particulièrement étendue.

A l'ouverture 15a de la soupape d'échappement la pression dans la chambre augmente à la valeur de la pression dans la conduite d'échappement. Au point 16, le cylindre atteint son point mort haut, alors que la soupape d'échappement reste encore ouverte pendant le début de la phase d'expansion consécutive, de sorte qu'une partie des gaz brulés est ré-aspirée dans le cylindre, jusqu'à un point 16a où la soupape d'échappement est actionnée en fermeture et la soupape d'admission est actionnée en ouverture, avec un croisement de soupapes choisi, le point 16a étant avantageusement positionné au même instant dans le cycle que le point 12a de fermeture de soupape d'échappement de la première loi de levée 3. Grâce à cette seconde loi de levée, on actionne la soupape d'échappement en ouverture lorsque la pression dans le cylindre est proche de la pression dans le collecteur d'échappement, de manière à ne pas générer de pertes par pompage.

Cette seconde loi de levée illustrée par le triangle 5 présente en outre une course de levée réduite ou levée partielle, de sorte que l'expulsion des gaz d'échappement s'effectue de manière progressive et adaptée au cycle actif.

Le point 17 correspond au point mort bas du cylindre, et le point 17a, ultérieur au point 17, à la fermeture de la soupape d'admission. Le point 18 correspond à la commande de combustion, initiée au point mort haut. Le cycle activé se termine par une phase de détente avant le début du cycle suivant, ici un cycle désactivé à nouveau.

Ce mode de distribution permet de choisir une définition optimale des deux lois de levée de manière à assurer un critère de pression minimum dans le cylindre et de minimiser les pertes de pompage pendant le cycle désactivé. En utilisant deux lois de levée différentes on apporte en outre un degré de liberté supplémentaire pour régler la phase d'échappement du cycle activé. Du fait que l'on a plus la même loi de levée selon que l'on se trouve en cycle actif ou en cycle désactivé, lesquelles n'ont plus à respecter un compromis entre bonne course d'expansion par une ouverture de soupape d'échappement proche du point mort bas et une rétention de fraction de gaz résiduels par une fermeture de soupape d'échappement tardive pour l'ensemble du champ de fonctionnement du moteur, on peut maintenant optimiser l'ouverture de la soupape d'échappement par la première loi de levée de manière que celle-ci soit au meilleur phasage pour obtenir un travail positif maximal pendant la phase d'expansion et optimiser la fermeture de la soupape d'échappement de la seconde loi de levée de manière à obtenir la meilleure fraction de gaz résiduel lors du cycle actif. Les phases se produisant entre les points 12 et 12a et entre les points 15 et 15a sont avantageusement réglées de manière à définir la première et la deuxième loi de levée.

Cette stratégie de désactivation peut être mise en oeuvre même avec un réglage de distribution ne faisant appel à aucun retard de la fermeture de la soupape d'échappement comme par exemple en phase de démarrage à froid. Une telle stratégie peut permettre jusqu'à 10% de réduction de consommation de carburant supplémentaire sur le gain total prédit sans l'utilisation de la désactivation de cylindre avec le moteur froid par rapport aux stratégies précédentes qui ne permettent pas son utilisation avec le moteur froid.

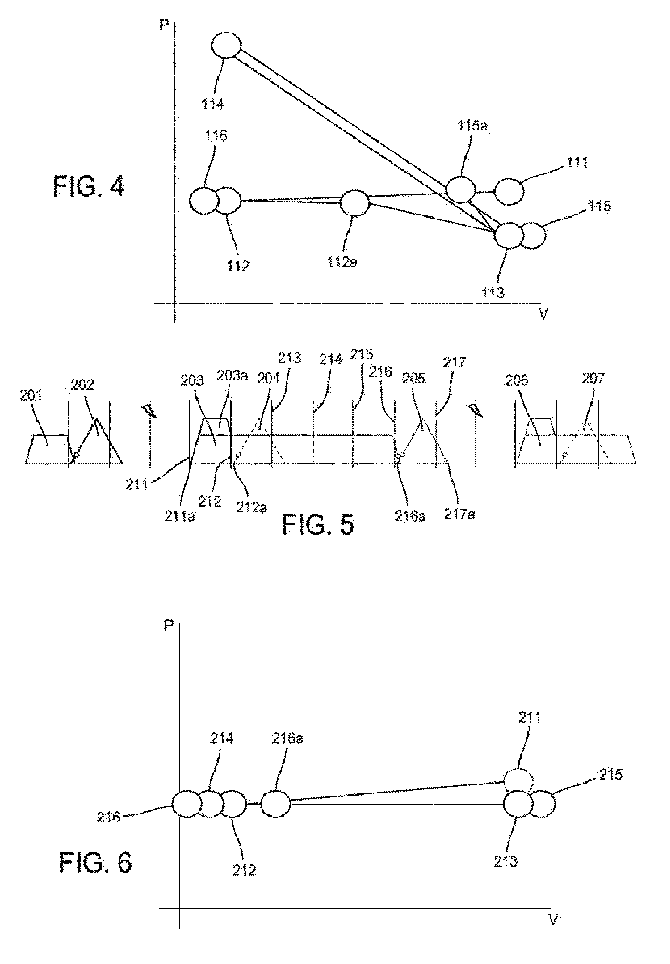

On a représenté sur les figures 3 et 4 un deuxième mode de réalisation de l'invention. Sur la figure 3, le cycle inactif débute au point mort bas représenté sous la référence 111, lequel point mort bas 111 se produit après la combustion du cycle actif précédent, dont le déclenchement de la combustion est symbolisé par un éclair. A ce moment l'ensemble des soupapes du cylindre est fermé, jusqu'à un point 111a correspondant au début de l'ouverture 103 d'une première soupape d'échappement. Le présent cylindre comporte deux soupapes d'échappement et la deuxième soupape d'échappement décrit une ouverture représentée sous la forme d'un triangle 103a lequel est légèrement retardé par rapport à l'ouverture de la première soupape. Entre le point 111 et le point 111a, une première phase de compression est donc ici réalisée avant que la première soupape d'échappement ne soit ouverte. Au point 111a, la soupape d'échappement est ouverte et la pression dans le cylindre dévient égale à la valeur de la pression dans la conduite d'échappement.

Le cylindre atteint alors son point mort haut sous la référence 112. Entre le point 111a et le point 112, les gaz d'échappement initialement contenus dans le cylindre sont donc expulsés dans la conduite d'échappement par la première et la deuxième soupape.

Le point 112a correspond à l'instant de fermeture de la première soupape d'échappement et le point 112b correspond à la fermeture de la seconde soupape d'échappement. Le point 112a de fermeture de la première soupape d'échappement est avantageusement positionné à proximité du point mort haut 112. Les points 112a et 112b sont néanmoins ici plus tardifs que le point mort haut 112, de sorte qu'entre le point 112 et les points 112a et 112b, le cylindre est le siège d'un début de mouvement d'expansion. Une portion des gaz d'échappement est alors ré-aspirée dans le cylindre, puis piégée dans le cylindre au moment illustré par le point 112b où la seconde soupape d'échappement est actionnée en fermeture pour marquer la fin du triangle 103a. La soupape d'admission est, dans le présent cycle désactivé, maintenue fermée selon le triangle en pointillé 104 de sorte que les gaz d'échappement sont maintenus en enceinte close à partir du point 112b. En variante, la soupape d'admission peut être ouverte avec une loi de levée plus restreinte en course ou en durée que la loi de levée ayant lieu pendant le cycle actif. Entre le point 112b et le point 113 où le cylindre atteint son point mort bas, les gaz d'échappement subissent une expansion. On s'assure par la ré-aspiration des gaz d'échappement que l'on piège suffisamment de gaz brulés pour ne pas atteindre une pression trop basse au point mort bas 113. A ce titre une pression d'au moins 0,15 bars est avantageuse.

Le fait de ré-aspirer seulement une portion des gaz brulés permet en outre de ne pas re-compresser une forte quantité de gaz brulés, qui sont très chauds et à très haute pression.

La fin du cycle désactivé consiste en la re-compression des gaz brulés jusqu'à atteindre le point mort haut 114, puis une ré-expansion du volume de la chambre jusqu'à atteindre le point mort bas 115. Le cycle activé commence alors.

Le cycle activé commence par une phase de réduction du volume de la chambre de combustion, laquelle est ici réalisée avec une seule des deux soupapes d'échappement ouverte, ici la première soupape d'échappement tel qu'illustré par le triangle en trait plein 105, alors que la seconde soupape d'échappement est désactivée et reste fermée tel qu'illustré par le triangle en trait pointillé 105a.

Plus spécifiquement, au point mort bas 115 la portion de gaz d'échappement réaspirés lors du cycle désactivé est toujours présente dans le cylindre et elle subit donc un début de compression. A point 115a d'ouverture de la première soupape d'échappement la pression dans le cylindre augmente à la pression dans le collecteur d'échappement jusqu'au point mort haut 116, engendrant alors une légère perte par pompage. La phase d'expansion suivante débute alors que la première soupape d'échappement est toujours ouverte, de sorte qu'une ré-aspiration de gaz d'échappement prend place dans le cylindre jusqu'à atteindre un point 116a où la soupape d'admission s'ouvre pour débuter la phase d'ouverture représentée par le triangle 106. Le cylindre atteint le point mort bas 117 puis débute une nouvelle phase de réduction de volume constituant la phase de compression, la soupape d'admission adoptant sa position fermée en un point 117a au cours de cette phase de réduction de volume. La combustion est déclenchée au point mort haut 118. Le cycle activé se termine par une phase de détente avant le début du cycle suivant, ici un cycle désactivé à nouveau.

Dans le présent cas, on conserve lors des cycles activé et désactivé une portion des gaz d'échappement dans le cylindre, en respectant un minimum de pression dans le cylindre pendant le cycle désactivé.

Ce mode de réalisation est particulièrement avantageux lorsque le réglage du moteur en cycle actif à faible régime et à faible charge permet d'adopter une fermeture de soupape d'échappement tardive. Si la position de la fermeture de la soupape d'échappement n'est pas très tardive, c'est à dire pour une fermeture de soupape inférieure à 25 degrés d'angle sur le vilebrequin, on produit du vide dans la chambre de combustion pendant la phase d'expansion s'étendant du point 112a au point 113.

Ce mode de réalisation confère là encore une grande liberté de réglage des ouvertures des soupapes d'échappement ainsi que des fermetures des soupapes d'échappement. Ce mode de réalisation est particulièrement intéressant dans le cas de moteurs déjà équipés de systèmes de cames concentriques ou cam-in-cam en anglais pour came dans la came, applicables aux moteurs turbo-chargés. De tels systèmes permettent en effet de caler en phase chaque soupape d'échappement dans une position différente, ou encore de modifier la largeur d'ouverture de soupape d'au moins une soupape échappement. Les lois 103 et 105, ici une même loi pour une même soupape, ne sont pas nécessairement égales aux lois 103a et 105a, elles peuvent différer en levée maximale et largeur totale d'ouverture de soupape.

On a représenté sur les figures 5 et 6 un troisième mode de réalisation de l'invention. Sur la figure 5, le cycle inactif débute au point mort bas représenté sous la référence 211, lequel point mort bas 211 se produit après la combustion du cycle actif précédent, dont le déclenchement de la combustion est symbolisé par un éclair. A ce moment l'ensemble des soupapes du cylindre est fermé, jusqu'à un point 211a correspondant au début de l'ouverture 203 d'une première soupape d'échappement. Le présent cylindre comporte deux soupapes d'échappement et la deuxième soupape d'échappement décrit une ouverture représentée sous la forme d'un triangle 203a lequel présente une course d'ouverture plus grande que l'ouverture 203 de la première soupape. Au point 211a, les soupapes d'échappement sont ouvertes et la pression dans le cylindre dévient égale à la valeur de la pression dans la conduite d'échappement.

Le cylindre atteint alors son point mort haut sous la référence 212. Entre le point 211a et le point 212, les gaz d'échappement initialement contenus dans le cylindre sont donc expulsés dans les conduites d'échappement par la première et la deuxième soupape.

Le point 212a correspond à l'instant de fermeture de la seconde soupape d'échappement, dont le mouvement est représenté par le triangle 203a. La première soupape est néanmoins maintenue ouverte jusqu'à englober la phase d'échappement du cycle actif suivant. Ainsi, le cylindre est d'abord le siège d'un mouvement d'expansion entre le point mort haut 212 et le point mort bas 213, alors que la soupape d'admission est désactivée tel qu'illustré par le triangle pointillé 204. Les gaz d'échappement sont alors réaspirés dans le cylindre. Le cylindre atteint ensuite son point mort haut 214 correspondant normalement à la phase de compression, mais correspondant ici à une nouvelle expulsion des gaz d'échappement hors du cylindre. La soupape d'admission est, dans le présent cycle désactivé, maintenue fermée de sorte que les gaz d'échappement ne transitent que par la soupape d'échappement maintenue ouverte. On notera que la soupape d'échappement est avantageusement maintenue dans une position d'ouverture partielle de manière à éviter un contact de la soupape avec le piston dans la position de point mort haut.

La phase d'expansion suivante débute alors que la première soupape d'échappement est toujours ouverte, de sorte qu'une ré-aspiration de gaz d'échappement prend place dans le cylindre jusqu'à atteindre le point mort bas 215 où débute le cycle actif.

Le cycle actif débute par une phase d'échappement laquelle consiste à expulser à nouveau les gaz d'échappement alors que la première soupape d'échappement est toujours ouverte. La seconde soupape d'échappement est maintenue en position fermée pendant cette phase d'échappement. Après le point mort haut 216 la première soupape d'échappement est fermée au point 216a de sorte qu'une portion de gaz d'échappement est ré-aspirée par le cylindre. La soupape d'admission s'ouvre alors pour débuter la phase d'ouverture représentée par le triangle 205. Le cylindre atteint le point mort bas 217 puis débute une nouvelle phase de réduction de volume constituant la phase de compression, la soupape d'admission adoptant sa position fermée en un point 217a au cours de cette phase de réduction de volume. La combustion est déclenchée au point mort haut 218. Le cycle activé se termine par une phase de détente avant le début du cycle suivant, ici un cycle désactivé à nouveau.

Dans ce mode de réalisation, le cylindre reste donc en liaison gazeuse avec le collecteur d'échappement depuis le début du cycle désactivé jusqu'à la fin de la phase d'échappement du cycle actif.

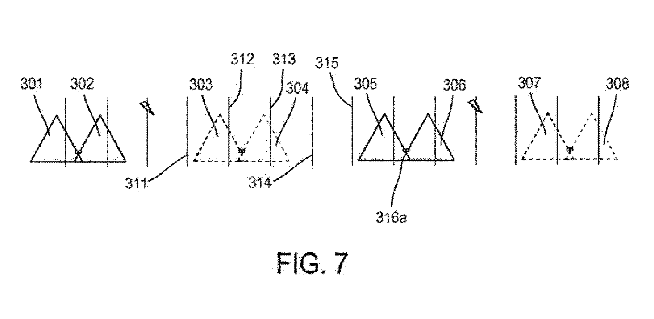

On a représenté sur la figure 7 un quatrième mode de réalisation de l'invention. Sur la figure 7, le cycle désactivé débute au point mort bas représenté sous la référence 311, lequel point mort bas 311 se produit après la combustion du cycle actif précédent, dont le déclenchement de la combustion est symbolisé par un éclair. A ce moment l'ensemble des soupapes du cylindre est fermé. Selon le présent mode de réalisation, les soupapes d'admission et d'échappement du cylindre sont maintenues fermées pendant l'ensemble du cycle inactif. Ainsi, les gaz d'échappement générés par la combustion au cycle actif précédent sont maintenus piégés dans le cylindre au cours de l'ensemble du cycle désactivé. Ainsi, le cylindre décrit successivement un point mort haut 312 alors que la soupape d'échappement est désactivée selon le triangle en pointillé 303, puis un point mort bas 313 alors que la soupape d'admission est désactivée selon le triangle en pointillé 304 puis un point mort haut 314 après une deuxième compression des gaz d'échappement et enfin une nouvelle expansion jusqu'au point mort bas 315 formant le début du cycle actif.

Le cycle actif débute donc par l'expulsion des gaz d'échappement générés lors du cycle actif précédent. Lors de cette phase d'expulsion des gaz d'échappement, on ménage ici un maintien en position ouverte de la soupape d'échappement selon le triangle 305 jusqu'à un point de fermeture 316a se trouvant après le point mort haut de sorte qu'une portion des gaz d'échappement est ré-aspirée dans le cylindre après la phase d'échappement du début du cycle actif.

Ce mode de réalisation est particulièrement adapté pour une mise en oeuvre à très faible charge du moteur, afin de ne pas dépasser la pression maximale acceptable pour le cylindre et de ne pas fondre la chambre de combustion, les soupapes ou le piston. Ce mode de réalisation présente l'avantage de permettre au moteur de chauffer deux fois plus vite que lors d'un fonctionnement normal.

Le pilotage des soupapes pour mettre en oeuvre ces différents modes de réalisation peut être électrique, électropneumatique, hydraulique ou purement mécanique.

Ainsi un dispositif de modification de comportement de soupape peut de manière connue en soi être réalisé sous la forme de soupapes actionnées de manière électrique, hydraulique ou électromagnétique sous la commande d'un processeur tel que le module de contrôle moteur. Les soupapes peuvent en variante être des soupapes à linguet, à butée ou à poussoir dés-activables par ouverture d'un canal hydraulique de commande. En variante encore les soupapes peuvent être commandées par une pluralité d'arbres à cames dont on utilise sélectivement l'une ou l'autre des cames selon que l'on souhaite désactiver ou non une soupape.

Le tableau 1 ci-dessous synthétise le mode de fonctionnement d'un moteur à trois cylindres avec désactivation tournante, par comparaison avec un mode de fonctionnement conventionnel. On voit qu'avec un mode de désactivation tournante, on réduit d'un facteur 2 l'apport de puissance fourni vers le vilebrequin moteur par les cylindres, dans le cas où le nombre de cylindres dans le moteur est un multiple de 3 (3 ou 6 cylindres par exemple). Tous les trois cylindres subissent la désactivation des cylindres, c'est-à-dire la désactivation de leurs soupapes). Le système de l'invention de « boucle d'air tournant» consiste à alterner de façon périodique deux cycles moteurs (cycle A actif, cycle B désactivé) pour tous les cylindres du moteur.

**Tableau 1**

| | | | | | | |
|---|---|---|---|---|---|---|
| ordre de combustion des 3 cylindres | 1 | 3 | 2 | 1 | 3 | 2 |
| mode à 3 cylindres conventionnel | 1 | 1 | 1 | 1 | 1 | 1 |
| 1 = cylindre activé | | | | | | |
| mode à 3 cylindres avec désactivation tournante | 1 | 0 | 1 | 0 | 1 | 0 |
| 1 = cylindre activé | | | | | | |
| 0 = cylindre désactivé | | | | | | |

La figure 11 représente l'état des trois cylindres C1, C2 et C3 d'un moteur trois cylindres fonctionnant de façon conventionnelle (sans désactivation), avec les mêmes conventions de représentation que les figures précédentes 1,3,5,7,9. La fenêtre d'analyse F, représentée à la figure par un encadré, est choisie sur quatre temps, pour la comparer par la suite à la fenêtre correspondante en désactivation tournante (figure 12). Si on étude cette fenêtre F :
- on constate que tous les cylindres C1,C2 et C3 réalisent un même cycle moteur à quatre temps (cycle noté S à la figure),
- on constate également que le phasage temporel de ce cycle moteur S est différent pour chaque cylindre, du fait qu'on a un nombre impair de cylindres, on a une combustion à chaque rotation à 240° du vilebrequin).

La figure 12 représente l'état des trois mêmes cylindres C1,C2,C3 quand on fait fonctionner, selon l'invention, le moteur en désactivation tournante. Si on analyse l'état des cylindres sur la fenêtre F, également représentée par un encadré, on constate que
- tous les cylindres réalisent un type différent de cycles moteur 4 temps (un cycle noté A à la figure signifie un cycle où le cylindre est actif, un cycle noté B à la figure signifie un cycle où le cylindre est désactivé). Ainsi, le cylindre C1 a majoritairement des cycles de type B, le cylindre C2 subit une fin de cycle A et un début de cycle B (proportion 1/3 cycle A pour 2/3 cycle B), et le cylindre C3 subit une fin de cycle B et un début de cycle A (proportion 1/3 de cycle B pour 2/3 de cycle A).
- on a une répétition d'un même cycle (A ou B) à chaque 8 temps du moteur,
- on a une succession continue des cycles A et B,
- le phasage temporel de ces cycles moteurs est différent pour chaque cylindre (en désactivation tournante avec un moteur à 3 cylindres, on a une combustion à chaque rotation à 480° du vilebrequin).

## Revendications

1. Moteur à combustion de véhicule automobile comprenant un jeu de cylindres formant chambres de combustion en désactivation tournante et un jeu de soupapes associées respectivement à ces cylindres, le moteur comportant un dispositif de modification de comportement des soupapes, le dispositif de modification de comportement des soupapes étant configuré pour commander pour au moins un cylindre deux cycles respectivement activé et désactivé du cylindre, lesquels cycles comportent chacun une phase initiale (12,112,212,312,16,116,216,316) consistant en une réduction de volume de la chambre laquelle phase initiale (12,112,212,312) met en oeuvre dans le cas du cycle activé un échappement effectif de gaz hors du cylindre par au moins une soupape d'échappement, lesquels cycles comportant chacun après la phase initiale de réduction de volume (12,112,212,312,16,116,216,316) une suite de trois phases consistant successivement en une phase d'expansion du volume (13,113,213,313,17,117,217) de la chambre de combustion, une seconde phase de réduction de volume (14,114,214,314) de la chambre puis une seconde phase d'expansion de volume (15,115,215,315) de la chambre, **caractérisé en ce que** le dispositif de modification de comportement de soupapes est configuré pour qu'au moins une soupape d'échappement dudit au moins un cylindre présente une cinétique différente pendant la phase initiale de réduction de volume selon que le cylindre est en cycle activé ou en cycle désactivé (3,5,103,103a,105,105a,203,203a,303,305).

2. Moteur à combustion selon la revendication 1, **caractérisé en ce que** le dispositif de modification de comportement de soupapes est configuré de telle sorte qu'en cycle activé la phase d'expansion (17,117,217) consécutive à la phase initiale de réduction de volume (16,116,216,316) est réalisée avec au moins une soupape d'admission du cylindre ouverte (5,105,205,305) pendant au moins une partie de la phase d'expansion (17,117,217) et en cycle désactivé la phase d'expansion (13,113,213,313) consécutive à la phase initiale de réduction de volume (12,112,212,312) est réalisée avec toutes les soupapes d'admission du cylindre fermées (4,104,204,304) pendant l'ensemble de cette phase d'expansion (13,113,213,313).

3. Moteur à combustion selon l'une quelconque des revendications précédentes, **caractérisé en ce que** le dispositif de modification de comportement de soupapes est configuré de telle sorte que dans la phase initiale de réduction de volume (12,112,212,312,16,116,216,316) une ouverture globale considérée sur l'ensemble des soupapes d'échappement du cylindre est plus faible en cycle activé qu'en cycle désactivé.

4. Moteur à combustion selon l'une quelconque des revendications précédentes, **caractérisé en ce que** le dispositif de modification de comportement de soupapes est configuré de telle sorte que dans la phase initiale de réduction de volume (12,112,212,312,16,116,216,316) une soupape d'échappement du cylindre présente une course d'ouverture qui est plus faible en cycle activé (5,203) qu'en cycle désactivé (3,203a).

5. Moteur à combustion selon l'une quelconque des revendications précédentes, **caractérisé en ce que** ledit au moins un cylindre comporte au moins deux soupapes d'échappement, le dispositif de modification de comportement de soupapes est configuré pour placer au moins une desdites, notamment au moins deux soupapes d'échappement en position ouverte (3,103,103a,203,203a) pendant au moins un partie de la phase initiale de réduction de volume en cycle désactivé (12,112,212,312) et maintenir au moins une soupape fermée (105a) parmi lesdites soupapes, notamment parmi au moins deux soupapes pendant la phase initiale de réduction de volume en cycle activé.

6. Moteur à combustion selon l'une quelconque des revendications précédentes, **caractérisé en ce que** le dispositif de modification de comportement de soupapes est configuré pour actionner en ouverture ladite au moins une soupape d'échappement (203) en début de phase initiale de réduction de volume (212) dans le cas du cycle désactivé et pour maintenir cette soupape d'échappement ouverte (203) pendant les phases successives d'expansion (213), de réduction (214) et d'expansion (215) de volume du cycle désactivé.

7. Moteur à combustion selon la revendication 1 ou la revendication 2, **caractérisé en ce que** le dispositif de modification de comportement de soupapes est configuré de telle sorte qu'en cycle désactivé toutes les soupapes d'échappement sont fermées (303,304) pendant la phase initiale de réduction de volume de la chambre (312) et pendant la seconde phase de réduction de volume (314) de sorte les gaz d'échappement générés pendant un cycle activé précédent restent prisonniers dans la chambre pendant l'ensemble du cycle désactivé.

8. Moteur à combustion selon l'une quelconque des revendications précédentes, **caractérisé en ce que** la phase initiale de réduction de volume (12,112,212,312,16,116,216) met en oeuvre dans le cas du cycle désactivé un échappement effectif de gaz hors du cylindre par au moins une soupape d'échappement (3,103,103a,203,203a), et en cycle désactivé au moins une soupape d'échappement du cylindre reste ouverte (3,103,103a,203,203a) au-delà de la fin de la phase initiale de réduction de volume de la chambre (12,112,212) et pendant une partie de la phase d'expansion consécutive (13,113,213) de sorte que ladite phase d'expansion consécutive (13,113,213) produit une aspiration de gaz d'échappement dans le cylindre par la soupape d'échappement.

9. Moteur à combustion selon l'une quelconque des revendications précédentes, **caractérisé en ce que** le dispositif de modification de comportement de soupapes est configuré de telle sorte que ledit au moins un cylindre effectue alternativement un cycle activé (16,116,216,316) et un cycle désactivé (12,112,212,312).

10. Moteur à combustion selon l'une quelconque des revendications précédentes, **caractérisé en ce qu'**il comporte trois cylindres (C1,C2,C3).

11. Moteur à combustion selon la revendication précédente, **caractérisé en ce que**, sur une période d'analyse sur quatre temps, tous les cylindres (C1,C2,C3) réalisent un type différent de cycle moteur, les types étant le cycle moteur (A) actif et (B) désactivé.

12. Moteur à combustion selon la revendication 10 ou 11, **caractérisé en ce qu'**on répète le même cycle, de type (A) activé ou (B) désactivé, tous les 8 temps du moteur.

13. Moteur à combustion selon l'une des revendications 10 à 12, **caractérisé en ce que** le phasage temporel des cycles moteur (A) activé ou (B) désactivé est différent pour chaque cylindre (C1,C2,C3).
